# EUROPEAN PATENT SPECIFICATION

(11) **EP 3 324 386 B1**
(45) Date of publication and mention of the grant of the patent: **06.09.2023**
(21) Application number: 17201471.4
(22) Date of filing: 13.11.2017
(51) Int. Cl.: G08G 5/00, G08G 5/04

(54) **MANEUVER PREDICTION FOR SURROUNDING TRAFFIC**
MANÖVERVORHERSAGE FÜR UMGEBUNGSVERKEHR
PRÉDICTION DE MAN UVRE POUR CIRCULATION ENVIRONNANTE

(30) Priority: 15.11.2016 US 201615351826
(43) Date of publication of application: 23.05.2018
(73) Proprietor: The Boeing Company, Arlington, VA 22202 (US)
(72) Inventor: SINDLINGER, Andreas, 63263 Neu-Isenburg (DE); PARRA, Garoe Gonzalez, 63263 Neu-Isenburg (DE); SCHULZE, Jonas Michael, 63263 Neu-Isenburg (DE)
(74) Representative: Smith, Jeremy Robert

(56) References cited:
- US-A1- 2002 133 294
- US-A1- 2013 338 910
- US-A1- 2016 117 936
- US-B1- 6 201 482

## Description

### Field

This disclosure relates to systems and methods for vehicle navigation. In particular, the present disclosure is concerned with navigating a vehicle based on predicted trajectories of other vehicles.

### Background

Vehicles operating in traffic may have different capabilities and, accordingly, operate at different speeds and/or travel in different corridors. For example, some aircraft within an airspace may operate at lower speeds and altitudes than others. As a result, an aircraft capable of operating efficiently at high speeds may be forced to fly at a suboptimal speed to accommodate slower traffic occupying the same flight corridor. The planned arrival time of the aircraft at its destination may, therefore, be delayed and the aircraft may burn more fuel than it would have otherwise. In another situation, an air traffic controller may require the aircraft to increase its altitude to avoid any interference with the slower aircraft. However, such unplanned maneuvers may burn more fuel than a preplanned change in trajectory performed to occupy a more efficient cruising altitude or to maneuver at a more efficient rate.

In situations such as those above, an operator of the vehicle can attempt to make a maneuver that mitigates the interference of the slower traffic. However, existing navigations systems may not offer sufficient information of other traffic for the operator to plan and implement such a maneuver. For example, when deciding whether to change trajectory, an aircraft pilot may only have access to limited traffic information from radio communication or traffic collision avoidance system ("TCAS") advisories. By relying on such limited traffic information, the pilot may make a maneuver that is more costly (i.e., less efficient) than its alternatives. Moreover, because the pilot must take the effort to obtain and analyze the available traffic information, the pilot may be unable to make a timely request for a change in trajectory from an air traffic controller.

US 2002133294 A1 mentions a method and apparatus to provide coordinated evasive maneuver commands to aircraft to avoid collisions, comprising a GPS system to determine the location of aircraft, and control logic to calculate evasive maneuvers, display aircraft tracking information, coordinate the evasive maneuver with the intruding aircraft, and give a synthetic voice warning and command to the pilots.

US 6201482 mentions a method of detecting a collision risk and preventing air collisions, in which it is proposed that probabilities should be calculated for the likely presence of one's own aircraft in predetermined sectors at a number of selected times (probabilities of presence) and these probabilities for one's own aircraft and those for other objects should be used to calculate the probabilities of one's own aircraft and at least one of the other objects being present simultaneously in a given sector (probabilities of collision) for the predetermined sectors and selected times.

US 2013338910 A1 mentions a method of detecting conflicts between aircraft passing through managed airspace, and resolving the detected conflicts strategically. It is said that the method may include obtaining intended trajectories of aircraft through the airspace, detecting conflicts in the intended trajectories, forming a set of the conflicted aircraft, calculating one or more revised trajectories for the conflicted aircraft such that the conflicts are resolved, and advising the conflicted aircraft subject to revised trajectories of the revised trajectories.

US 2016117936 A1 mentions a non-transitory processor-readable medium storing code which causes a processor at a first vehicle (e.g., a first autonomous vehicle) to generate a first planned path based on a current position of the first vehicle and a mission requirement assigned to the first vehicle. A first planned path associated with a second vehicle (e.g., a second autonomous vehicle), which is based on a current position of the second vehicle and a mission requirement assigned to the second vehicle, is received at the first vehicle. After the first planned path associated with the second vehicle is received, a second planned path is generated based on the first planned path associated with the second vehicle and at least one of the mission requirement assigned to the first vehicle or the first planned path of the first vehicle. The second planned path of the first vehicle is transmitted to the second vehicle.

### Summary

An invention is set out in the independent claim(s).

According to claim 1, there is provided a processing system for an aircraft. According to claim 6, there is provided a method for navigating an aircraft. According to claim 11, there is provided a computer-program product as set out in claim 11.

The features, functions, and advantages that have been discussed can be achieved independently in various implementations or may be combined in yet other implementations further details of which can be seen with reference to the following description and drawings.

### Brief Description of the Drawings

The accompanying drawings, which are incorporated in and constitute a part of this specification, illustrate the present teachings and together with the description, serve to explain the principles of the disclosure.
FIG. 1 illustrates an example of an environment for implementing systems and processes in accordance an implementation of the present disclosure.
FIG. 2 illustrates an example of a vehicle in accordance with an implementation of the present disclosure.
FIG. 3 illustrates a block diagram of a vehicle processing system in accordance with an implementation of the disclosure.
FIG. 4 illustrates a process flow diagram including operations performed in accordance an implementation of the present disclosure.
FIG. 5 illustrates an example of a computer-user interface in accordance an implementation of the present disclosure.

It should be noted that some details of the figures have been simplified and are drawn to facilitate understanding of the present teachings, rather than to maintain strict structural accuracy, detail, and scale.

### Detailed Description

This disclosure relates to systems and methods for vehicle navigation. In particular, the present disclosure is directed to navigating a vehicle based on predicted trajectories (e.g., position, direction or travel, and/or acceleration) of other vehicles. Methods and systems in accordance with aspects of the present disclosure can predetermine a modification to a trajectory (e.g., a change in a planned speed, direction, and/or altitude) of the vehicle that eliminates interference with a predicted trajectory of another vehicle. As used herein, interference refers to a condition in which the predicted path of at least one vehicle traveling potentially affects (e.g., slows or modifies) the planned trajectory of another vehicle. However, in the context of this application, interference does not include determining imminent physical collisions between vehicles. Further, the methods and systems can present the modification to an operator of the vehicle along with information that assists the operator in choosing whether to accept such modification. In implementations, the modification includes a maneuver (e.g., a, turn, a decent, or a climb) that minimizes a possibility that transit of the vehicle through a particular path (e.g., a predefined travel corridor) followed by the vehicle will be delayed and/or blocked by the other vehicle (e.g., a slower aircraft), for example, the methods and systems can predict whether a flight plan of an aircraft interferes with the other aircraft and determine a change of the flight plan (e.g., an early step climb) that avoids the interference. Implementations, the prediction can be based on Automatic Dependent Surveillance - Broadcast ("ADS-B") information of surrounding air traffic. Additionally, the prediction can be based on historical information (e.g., past performance of the other aircraft's routine flights). Further, the prediction can be based on environmental information obtained from sensors, such as wind, temperature, and air density. Further, in implementations, the modification is only proposed if it provides a sufficient benefit.

For example, where the modification is for an aircraft to perform a step climb earlier than called for in the flight plan, the modification optionally is only presented to a pilot if the reduction in time, cost, and/or risk provide a sufficient cost benefit (e.g., greater than a threshold amount of time and/or fuel savings).

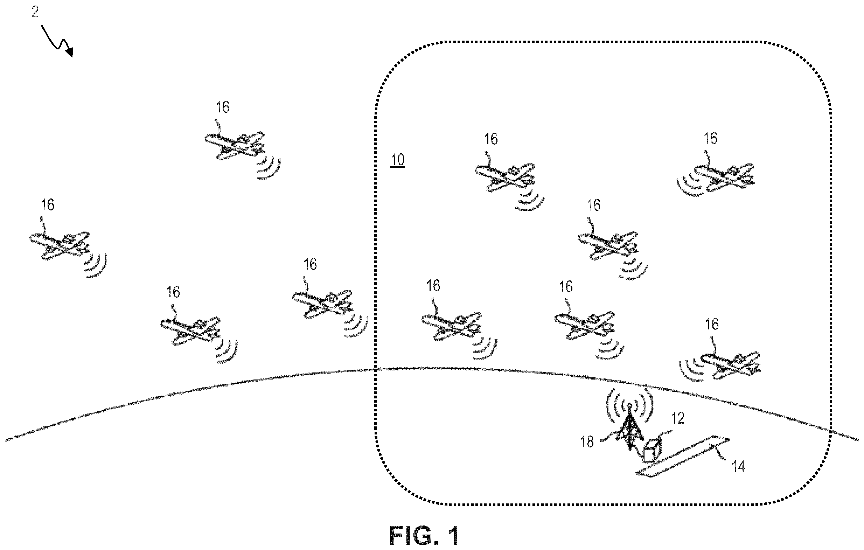

FIG. 1 is an example of an environment 2 for implementing methods and systems in accordance with aspects of the disclosure. The environment 2 includes airspace 10, an air traffic management facility 12, and an airport 14. The airspace 10 can include a region through which a number of aircraft 16 pass under control of the air traffic management facility 12. For example, the air traffic management facility 12 can be located at the airport 14 and be responsible for directing some or all of the aircraft 16 to maintain separation and/or flight corridors as they arrive and depart the airport 14, as well as when passing through the airspace 10. The air traffic management facility 12 includes a communication system 18 that allows two-way communication with the aircraft 16. Each of the aircraft 16 can be equipped with communication equipment (not shown in FIG. 1), such as a radio and/or a data link (e.g., ADS-B).

While environment 2 is illustrated using air travel, it is understood that implementations, consistent with the present disclosure can be applied to terrestrial vehicles. For example, the vehicles can be fully-autonomous or semi-autonomous automobiles, trucks, and the like controlled by a central or distributed management system to maintain separation and travel lanes while traveling on a road.

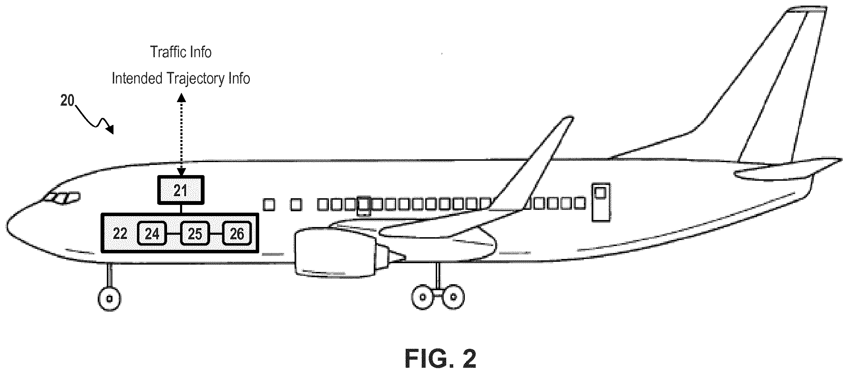

FIG. 2 illustrates an example of a vehicle 20 in accordance with aspects of the disclosure. In implementations, the vehicle 20 is an aircraft, which may be the same or similar to those previously described (e.g., aircraft 16). In accordance with aspects of the present disclosure, the vehicle 20 includes a communication system 21 and a vehicle processing system 22. The communication system 21 can be one or more devices providing a radio and/or a data link for exchanging information between the vehicle 20 and other systems (e.g. aircraft 16 and/or air traffic management facility 12. In accordance with aspects of the present disclosure, the communication system 21 can send and/or receive traffic information and intended trajectory information. The traffic information can describe the current states of other vehicles. In implementations, the traffic information can include, for each vehicle, an identifier, a position, a velocity, an acceleration, a direction, one or more weather conditions, a fuel level, a weight and/or a center of gravity. The communication system 21 can receive such data at a real-time or a near real-time rate.

The intended trajectory information comprises a flight plan for an aircraft. The intended trajectory information can include, for example, a preplanned path of a vehicle traveling from an origin location (e.g., airport 14) to a destination (e.g., a different airport similar to airport 14) during a particular trip. In implementations, the intended trajectory information can specify the origin location, the destination, a path, and rates of travel between the origin and the destination (e.g., latitudes, longitudes altitudes, and/or velocities) each portion of the path. The flight plan for the aircraft can be determined by, for example, a pilot, a flight manager, and/or a flight planning software application. Additionally, the intended trajectory information includes physical information of the aircraft such as gross weight, fuel level, and center of gravity.

The vehicle processing system 22 can be one or more devices for monitoring and controlling the vehicle 20. In implementations, the vehicle processing system 22 can receive, process, store, distribute, and/or display information regarding the state of the vehicle 20 between a various systems and sensors of the vehicle 20. For example, the vehicle processing system 22 can be a flight management system that receives information from sensors monitoring the state of vehicle's 20 drivetrain, and controls, processes such information, and drives displays for an operator of the vehicle 20. In accordance with aspects of the present of disclosure, the vehicle processing system 22 can include a navigation module 24, a path module 25, and an interference module 26. In some implementations, the navigation module 24, the path module 25, and/or the interference module 26 are components of the vehicle processing system 22. In other implementations, the navigation module 24, the path module 25, and/or the interference module 26 are physically separate units having respective computer processors communicatively coupled to the vehicle processing system 22 and to one another (e.g., avionics units communicating via a MIL-STD-1553 or a ARINC data network).

The navigation module 24 can be hardware, software, or a combination thereof that determines the position and speed of the vehicle 20. The path module 25 can be hardware, software, or a combination thereof communicatively linked with the navigation module 24 and the interference module 26, that guides the vehicle along an intended trajectory, which can include the same information as previously described.

The interference module 26 can be hardware, software, or a combination thereof communicatively linked with the navigation module 24 and the path module 25 that predicts potential interferences with other vehicles, determines probabilities of such interferences, and determines recommendations for avoiding such interferences. In accordance with aspects of the present disclosure, the interference module 26 compares intended trajectory information of the vehicle 20 obtained from, e.g., the path module 25 with traffic data and intended trajectory information of other vehicles (e.g., aircraft 16) received via the communication system 21. Additionally, based on the comparison, the path module 25 can determine a modification of the intended trajectory information of the vehicle 20 to avoid interference with another vehicle. The modification of the intended trajectory information of the vehicle 20 can be provided to the path module 25 for presentation to the operator of the vehicle 20, along with details of the prediction, such as a probability of the predicted interference and a time frame for the predicted interference. For example, where vehicle 20 is an aircraft, the interference module 26 can predict trajectories of other aircraft based on location and flight plans obtained via an ADS-B data link, and compare the predicted trajectories to a planned flight path of the vehicle 20. Based on such comparison, the interference module 26 can recommend that the vehicle perform, e.g., a preplanned step climb to a particular flight level early to avoid interference from the other aircraft that is also predicted to use the same flight level. By doing so, the aircraft can be occupy that flight level before the other aircraft. For example, the pilot of the aircraft can request the flight level from air traffic control (air traffic management facility 12) and, if approved, control the aircraft to the corresponding altitude. Thus, the disclosed system supports the pilot by making recommendations of when to request a certain flight level. In implementations, the recommendations can be based on a balance of costs. For example, requesting a certain flight level earlier than expected can result in some cost penalty because the aircraft may be too heavy for the particular level. However, such cost penalty might outweigh the costs of staying on the lower level (e.g. being too light or being obstructed by a slower aircraft). Additionally, the pilot can control the aircraft to climb at a gradual rate that is more efficient (in terms of fuel, time and/or risk) than would be required for an unplanned climb necessitated by the interference if such interference had not been predicted.

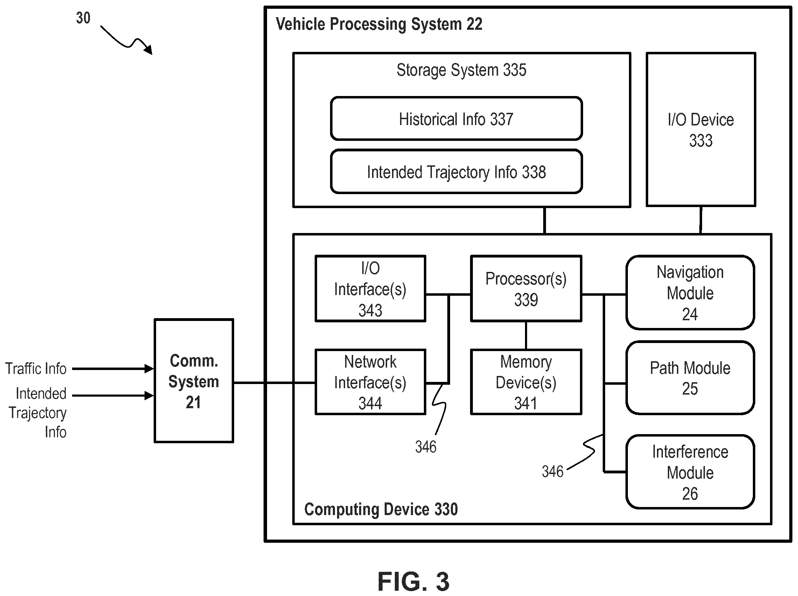

FIG. 3 illustrates a block diagram of a system 30 in accordance with aspects of the disclosure. The system 30 includes a communication system 21, a vehicle processing system 22, a navigation module 24, a path module 25, and an interference module 26, all of which can be the same or similar to those described previously. In accordance with aspects of the disclosure, the system 30 includes hardware and software that perform processes and functions described herein. In particular, the vehicle processing system 22 includes a computing device 330, an input/output (I/O) device 333, and a storage system 335. The I/O device 333 can include any device that enables an individual (e.g., a pilot) to interact with the computing device 330 (e.g., a user interface) and/or any device that enables the computing device 130 present information to the individual. For example, I/O device 333 can be a display and keyboard of a Control Display Unit ("CDU") and/or an Engine Instrument Crew Alerting System ("EICAS").

The storage system 335 can comprise a computer-readable, non-volatile hardware storage device that stores information and computer program instructions. For example, the storage system 135 can be one or more flash drives and/or hard disk drives. Additionally, in accordance with aspects of the disclosure, the storage system 335 includes historical information 337 and intended trajectory information 338. The historical information 337 can be a collection of data about prior trips and/or past trajectories of vehicles (e.g., aircraft 16). In implementations, the historical information 337 can incorporate information obtained from previous flight plans and/or flight profiles of the other aircraft. For example, the historical information 337 can include information for a routine flight of an airline from a particular origin to a particular destination. The information can include the type of aircraft, flight plans of the aircraft, and the trajectory of the aircraft. Further, the history information 337 can indicate maneuvers typically taken by the aircraft for the flight. For example, the history data 337 can indicate locations and times during a routing flight at which an aircraft changes altitude (e.g., timing and position of descending and performing an approach). Further, the history information 337 can indicate the state of the vehicle and its surroundings during the flight. For example, it can include aircraft type, configuration, weight, fuel load, and weather information. Intended trajectory information 338 can be the same or similar to that previously described. For example, the intended trajectory information 338 can includes information describing a particular trip taken by a vehicle including the system 30. In implementations, the intended trajectory information 338 is a flight plan of an aircraft.

In some implementations, the computing device 330 includes one or more processors 339, one or more memory devices 341 (e.g., RAM and ROM), one or more I/O interfaces 343, and one or more network interfaces 344. The memory device 341 can include a local memory (e.g., a random access memory and a cache memory) employed during execution of program instructions. Additionally, the computing device 130 includes at least one communication channel 346 (e.g., a data bus) by which it communicates with the I/O device 333, the storage system 135, the navigation module 24, the path module 25, and the interference module 26. The processor 339 executes computer program instructions (e.g., an operating system), which can be stored in the memory device 341 and/or storage system 335. Moreover, in accordance with aspects of the disclosure, the processor 339 can execute computer program instructions of the storage system 135, the navigation module 24, and the path module 25 to perform processes and functions described herein.

The vehicle processing system 22 can comprise any general purpose or special purpose computing article of manufacture capable of executing computer program instructions installed thereon (e.g., a personal computer, server, etc.). In implementations, the vehicle processing system 22 incorporates the functionality of existing flight management systems. However, it is understood that the vehicle processing system 22 is only representative of various possible equivalent-computing devices that can perform the processes described herein. To this extent, in some implementations, the functionality provided by the computing device 330 can be any combination of general and/or specific purpose hardware and/or computer program instructions. For example, the computing device 330 can be an off-the-shelf personal computer or a ruggedized flight mission computer. In some implementations, the program instructions and hardware can be created using standard programming and engineering techniques, respectively.

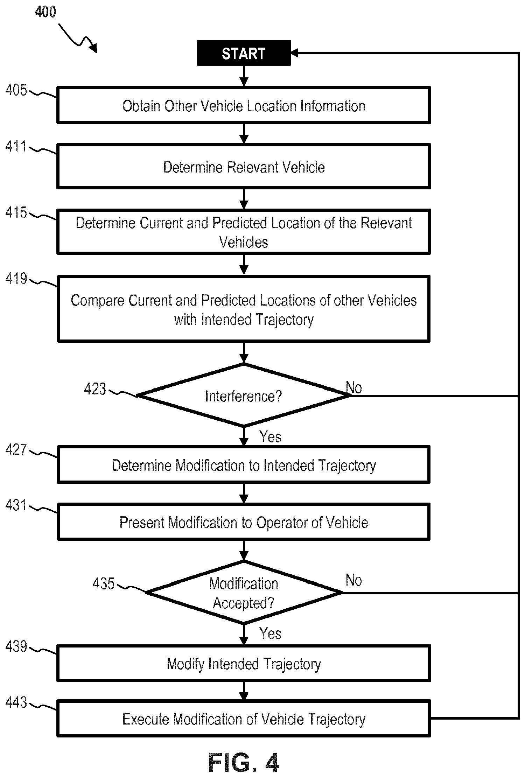

The flowchart in FIG. 4 illustrates functionality and operation of possible implementations of systems, devices, methods, and computer program products according to various implementations of the present disclosure. Each block in the flow diagram of FIG. 4 can represent a module, segment, or portion of program instructions, which includes one or more computer executable instructions for implementing the illustrated functions and operations. In some alternative implementations, the functions and/or operations illustrated in a particular block of the flow diagram can occur out of the order shown in FIG. 4. For example, two blocks shown in succession can be executed substantially concurrently, or the blocks can sometimes be executed in the reverse order, depending upon the functionality involved. It will also be noted that each block of the flow diagram and combinations of blocks in the block can be implemented by special purpose hardware-based systems that perform the specified functions or acts, or combinations of special purpose hardware and computer instructions.

FIG. 4 illustrates a flow diagram of an exemplary process 400 for predicting interference between a first vehicle and one or more other vehicles. Further, the process 400 can provide an operator with a choice of one or more maneuvers that mitigate the interference. In implementations the process 400 predicts aviation traffic along a trajectory of an aircraft and determines a change to an existing flight plan (e.g., an early climb) that can avoid the interfering traffic in a manner that saves fuel and/or time by, for example, by modifying the time and/or location of a preplanned maneuver (e.g., an early climb to a particular flight level).

At 405, the process 400 (executed, e.g., by vehicle processing system 22) obtains location information one or more other vehicles. The location information can be obtained by a communication system (e.g., communication system 21) via radio or data link transmissions. The location information can include traffic information and trip information, which can be the same or similar to those previously described. In some implementations, the information relates to a multitude of vehicles, such that the first vehicle can predict potential interferences with planned trajectories of any of the other vehicles.

At 411, the process 400 (using, e.g., interference module 26) determines one or more relevant vehicles from among the other vehicles based on the location information obtained at 405 In implementations, the determination of the relevant vehicles includes comparing the traffic information and/or the trip information of the one or more other vehicles to the trajectory (e.g., intended trajectory information 338) of the first vehicle and determining a probability that one of the other vehicles will interfere (e.g., obstruct in time and location). For example, the process 400 can determine that a particular one of the other vehicles is not relevant if there is no chance (0.0%) that its trajectory can intersect that of the first vehicle based on that particular vehicle's location, speed, and trajectory. In implementations, the relevance of another vehicle can also be determined using by historical data (e.g., historical data 337), such as past ADS-B data and past trip data (e.g., flight plans and schedules of other aircraft and/or airlines). For example, the vehicles can be aircraft and the determination of the relevant vehicle may exclude any aircraft that do not climb to flight levels, aircraft staying only on the same route for a short time, or aircraft only crossing the planned route at a relevant altitude.

At 415, the process 400 determines current and predicted positions of the relevant vehicles determined at 411. In implementations, the location information obtained at 405 for the relevant trips determined at 411 is analyzed to predict the trajectories and/or speed profiles of the other vehicles. For example, based on the information in the ADS-B messages and/or historical ADS-B recordings of a relevant aircraft (e.g., historical information 337), the process 400 (using, e.g., interference module 26) can predict of profile the position, altitude, and speed of the aircraft.

At 419, the process 400 compares current and predicted locations of the relevant vehicles determined at 415 with intended trajectory information of the first vehicle (e.g., intended trajectory information 338). At 423, the process 400 determines whether any interference exists based on the comparison made at 419. Additionally, in some implementations, the process determines with a likelihood of the interference (e.g., a percentage chance) and a time frame during which the interference may exist (e.g., 20-30 minutes, the next 15 minutes). If no interference exits, the process 400 iteratively restarts. However, if an interference is determined at 423 ("Yes"), then at 427, the process 400 determines one or more modifications to the intended trajectory (e.g., a maneuver) that resolves the interference with the at least one or more other vehicles. For example, an aircraft can determine that an early step climb to a planned flight level will avoid the interference, and determine an optimal time and rate for the step climb based on the current state of the aircraft, sensor data (e.g., current wind, temperature, air density), and the surrounding traffic.

At 431, the process 400 presents the modification determined at 427 to the operator of the first vehicle using a computer-user interface (e.g., I/O device 333). For example, the solutions can presented to a pilot of the vehicle on a CDU and/or an EICAS. At 435, the process 400 determines whether one of the solutions presented at 427 was accepted. If not ("No"), the process 400 iteratively restarts. However, if one of the solutions presented at 427 is accepted ("Yes"), then at 439 the process 400 modifies the intended trajectory of the first vehicle based on the solution. At 443, the process 400 executes the modification of the intended trajectory of the first vehicle.

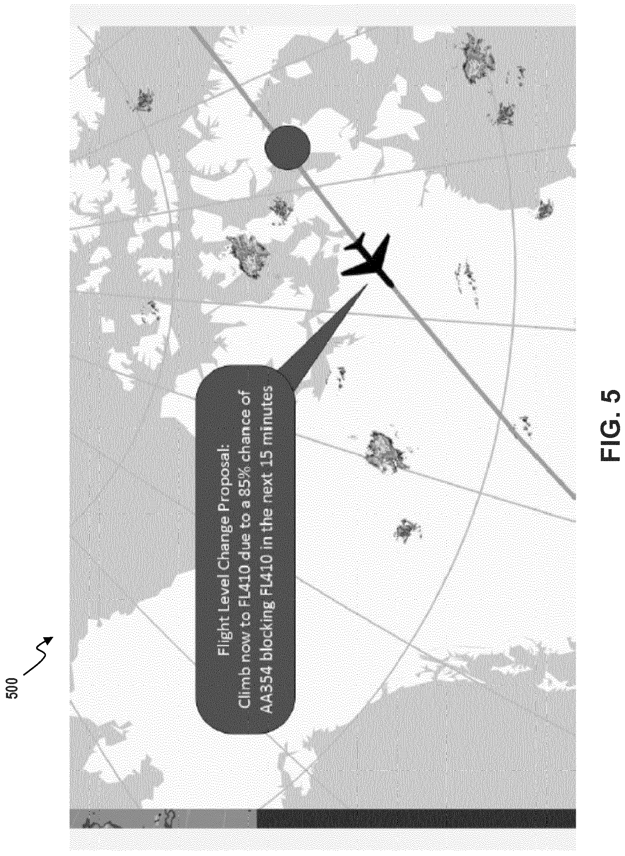

FIG. 5 illustrates an example of a computer-user interface 500 presenting a predicted interference and a solution to the interference in accordance with aspects of the present disclosure (e.g., 431). In implementations, the computer-user interface 500 can be presented by a navigation system (e.g., vehicle processing system 22) using a display device (e.g. I/O device 333). For example, the display device can be a CDU and/or EICAS presenting an aircraft on a map from a birds-eye-view along with a message indicating a solution (e.g., 427) to avoid a particular aircraft, along with a likelihood of the interference and a time frame during the solution should be executed (e.g., FIG. 4, 443). The pilot of the aircraft can accept the proposed change using the CDU/EICAS, which can automatically request a change in flight plan with air traffic control (e.g., air traffic management facility 12) and update the flight profile for the aircraft to incorporate the solution.

The present disclosure is not to be limited in terms of the particular implementations described in this application, which are intended as illustrations of various aspects. Many modifications and variations can be made without departing from its scope, as will be apparent to those skilled in the art.

Functionally equivalent methods and apparatuses within the scope of the disclosure, in addition to those enumerated herein, will be apparent to those skilled in the art from the foregoing descriptions. Such modifications and variations are intended to fall within the scope of the disclosure. It is also to be understood that the terminology used herein is for the purpose of describing particular implementations only, and is not intended to be limiting. The extent of the protection conferred shall be determined by the claims. The description and drawings shall be used to interpret the claims.

## Claims

1. A processing system (22) for an aircraft (20), the processing system (22) comprising:
a display unit (333);
a computer-readable hardware storage device (335); and
a processor (339) configured, by program instructions stored on the computer-readable hardware storage device for execution by the processor, to cause the processing system to perform operations comprising:
receiving (405), via a communication system (21) of the aircraft (20), location information of a plurality of other aircraft (16) and intended trajectory information of the plurality of other aircraft (16);
comparing (419) the location information of the plurality of other aircraft and the intended trajectory information of the plurality of other aircraft (16) with an intended trajectory information (500) of the aircraft (20);
determining (423) that interference (26) exists based on the comparing, wherein the intended trajectory information comprises a flight plan of the respective aircraft and physical information of the respective aircraft, and wherein the interference comprises one or more of the other aircraft (16) obstructing the flight plan of the aircraft in a predefined travel corridor;
determining (427) a modification to the intended trajectory information of the vehicle that resolves the interference with at least one of the plurality of other aircraft (16);
presenting (431), via the display unit, the modification to the intended trajectory information of the aircraft (20) to an operator of the aircraft (20); and
modifying (439) the intended trajectory information of the aircraft (20) using the modification.

2. The processing system of claim 1, wherein the modification comprises a step climb.

3. The processing system of any preceding claim, wherein the location information comprises Automatic Dependent Surveillance - Broadcast (ADS-B) information.

4. The processing system of any preceding claim, wherein the location information comprises historical information recorded during previous flights by the other aircraft (16).

5. The processing system of any preceding claim, wherein the processor is further configured to determine one or more relevant aircraft among the plurality of other aircraft (16) based on the location information and the intended trajectory information of the aircraft (20).

6. A method for navigating an aircraft (20) comprising:
receiving (405), via a communication system (21) of the aircraft (20), location information of a plurality of other aircraft (16) and intended trajectory information of the plurality of other aircraft (16);
comparing (419) the location information of the plurality of other aircraft (16)and the intended trajectory information of the plurality of other aircraft (16) with an intended trajectory information (500) of the aircraft (20);
determining (423) that interference exists based on the comparing, wherein the intended trajectory information comprises a flight plan of the respective aircraft and physical information of the respective aircraft, and wherein the interference comprises one or more of the other aircraft (16) obstructing the flight plan of the aircraft in a predefined travel corridor;
determining (427) a modification to the intended trajectory information of the aircraft (20) that resolves the interference with one of the plurality of other aircraft (16);
presenting (431) the modification to the intended trajectory information of the aircraft (20) to an operator of the aircraft (20); and
modifying (439) the intended trajectory information using the modification.

7. The method of claim 6, wherein the modification comprises a step climb.

8. The method of any of claims 6-7, wherein the location information comprises Automatic Dependent Surveillance - Broadcast (ADS-B) information.

9. The method of any of claims 6-8, wherein the location information comprises historical information recorded during previous flights by the other aircraft (16).

10. The method of any of claims 6-9, comprising determining one or more relevant aircraft among the plurality of other aircraft (16) based on the location information and the intended trajectory information of the aircraft (20).

11. A computer-program product comprising computer-readable program instructions stored on a computer-readable data storage device (335) that, when executed by a processor (339), controls a computing device to perform operations comprising:
receiving (405), via a communication system (21) of an aircraft (20), location information of a plurality of other aircraft (16) and intended trajectory information of the plurality of other aircraft (16);
comparing (419) the location information of the plurality of other aircraft (16) and the intended trajectory information of the plurality of other aircraft (16) with an intended trajectory information of the aircraft (20);
determining (423) that interference exists based on the comparing, wherein the intended trajectory information comprises a flight plan of the respective aircraft and physical information of the respective aircraft, and wherein the interference comprises one or more of the other aircraft (16) obstructing the flight plan of the aircraft in a predefined travel corridor;
determining (427) a modification to the intended trajectory information of the aircraft (20) that resolves the interference with one of the plurality of other aircraft (16);
presenting (431) the modification to the intended trajectory information of the aircraft (20) to an operator of the aircraft (20); and
modifying (439) the intended trajectory information using the modification.

12. The computer-program product of claim 11, wherein the modification comprises a step climb.

13. The computer-program product of any of claims 11-12, wherein the location information comprises Automatic Dependent Surveillance - Broadcast (ADS-B) information.

14. The computer-program product of any of claims 11-13, wherein the location information comprises historical information recorded during previous flights by the other aircraft (16).

15. The computer-program product of any of claims 11-14, wherein the computing device is controlled to perform operations further comprising determining one or more relevant aircraft among the plurality of other aircraft (16) based on the location information and the intended trajectory information of the aircraft (20).

## Patentansprüche

1. Verarbeitungssystem (22) für ein Flugzeug (20), wobei das Verarbeitungssystem (22) aufweist:
eine Anzeigeeinheit (333);
eine computerlesbare Hardwarespeichervorrichtung (335); und
einen Prozessor (339), der, durch Programmbefehle, die auf der computerlesbaren Hardwarespeichervorrichtung zur Ausführung durch den Prozessor gespeichert sind, dazu konfiguriert ist zu veranlassen, dass das Verarbeitungssystem Operationen durchführt, die aufweisen:
Empfangen (405), über ein Kommunikationssystem (21) des Flugzeugs (20), von Standortinformationen einer Vielzahl anderer Flugzeuge (16) und beabsichtigten Trajektorieninformationen der Vielzahl anderer Flugzeuge (16);
Vergleichen (419) der Standortinformationen der Vielzahl anderer Flugzeuge und der beabsichtigten Trajektorieninformationen der Vielzahl anderer Flugzeuge (16) mit beabsichtigten Trajektorieninformationen (500) des Flugzeugs (20);
Bestimmen (423), basierend auf dem Vergleichen, dass Interferenz (26) existiert, wobei die beabsichtigten Trajektorieninformationen einen Flugplan des jeweiligen Flugzeugs und physikalische Informationen des jeweiligen Flugzeugs aufweisen, und wobei die Interferenz aufweist, dass eines oder mehrere der anderen Flugzeuge (16) den Flugplan des Flugzeugs in einem vordefinierten Flugkorridor behindern;
Bestimmen (427) einer Änderung der beabsichtigten Trajektorieninformationen des Fahrzeugs, die die Interferenz mit wenigstens einem der Vielzahl anderer Flugzeuge (16) auflöst;
Darstellen (431), über die Anzeigeeinheit, der Änderung der beabsichtigten Trajektorieninformationen des Flugzeugs (20) für einen Bediener des Flugzeugs (20); und
Ändern (439) der beabsichtigten Trajektorieninformationen des Flugzeugs (20) unter Verwendung der Änderung.

2. Verarbeitungssystem nach Anspruch 1, wobei die Änderung einen Stufenaufstieg aufweist.

3. Verarbeitungssystem nach einem der vorhergehenden Ansprüche, wobei die Standortinformationen Automatic Dependent Surveillance - Broadcast (ADS-B) bzw. automatische bordabhängige Überwachungs -Informationen aufweisen.

4. Verarbeitungssystem nach einem der vorhergehenden Ansprüche, wobei die Standortinformationen historische Informationen aufweisen, die während früherer Flüge durch das andere Flugzeug (16) aufgezeichnet wurden.

5. Verarbeitungssystem nach einem der vorhergehenden Ansprüche, wobei der Prozessor des Weiteren dazu konfiguriert ist, ein oder mehrere relevante Flugzeuge unter der Vielzahl anderer Flugzeuge (16) basierend auf den Standortinformationen und den beabsichtigten Trajektorieninformationen des Flugzeugs (20) zu bestimmen.

6. Verfahren zum Navigieren eines Flugzeugs (20), das aufweist:
Empfangen (405), über ein Kommunikationssystem (21) des Flugzeugs (20), von Standortinformationen einer Vielzahl anderer Flugzeuge (16) und beabsichtigten Trajektorieninformationen der Vielzahl anderer Flugzeuge (16);
Vergleichen (419) der Standortinformationen der Vielzahl anderer Flugzeuge (16) und der beabsichtigten Trajektorieninformationen der Vielzahl anderer Flugzeuge (16) mit beabsichtigten Trajektorieninformationen (500) des Flugzeugs (20);
Bestimmen (423), basierend auf dem Vergleichen, dass Interferenz (26) existiert, wobei die beabsichtigten Trajektorieninformationen einen Flugplan des jeweiligen Flugzeugs und physikalische Informationen des jeweiligen Flugzeugs aufweisen, und wobei die Interferenz aufweist, dass eines oder mehrere der anderen Flugzeuge (16) den Flugplan des Flugzeugs in einem vordefinierten Flugkorridor behindern;
Bestimmen (427) einer Änderung der beabsichtigten Trajektorieninformationen des Flugzeugs (20), die die Interferenz mit einem der Vielzahl anderer Flugzeuge (16) auflöst;
Darstellen (431) der Änderung der beabsichtigten Trajektorieninformationen des Flugzeugs (20) für einen Bediener des Flugzeugs (20); und
Ändern (439) der beabsichtigten Trajektorieninformationen unter Verwendung der Änderung.

7. Verfahren nach Anspruch 6, wobei die Änderung einen Stufenaufstieg aufweist.

8. Verfahren nach einem der Ansprüche 6-7, wobei die Standortinformationen Automatic Dependent Surveillance - Broadcast (ADS-B) bzw. automatische bordabhängige Überwachungs -Informationen aufweisen.

9. Verfahren nach einem der Ansprüche 6-8, wobei die Standortinformationen historische Informationen aufweisen, die während früherer Flüge durch das andere Flugzeug (16) aufgezeichnet wurden.

10. Verfahren nach einem der Ansprüche 6-9, das das Bestimmen eines oder mehrerer relevanter Flugzeuge unter der Vielzahl anderer Flugzeuge (16) basierend auf den Standortinformationen und den beabsichtigten Trajektorieninformationen des Flugzeugs (20) aufweist.

11. Computerprogrammerzeugnis, das computerlesbare Programmbefehle aufweist, die auf einer computerlesbaren Datenspeichervorrichtung (335) gespeichert sind, die, wenn sie von einem Prozessor (339) ausgeführt wird, eine Rechnervorrichtung steuert, um Operationen durchzuführen, die aufweisen:
Empfangen (405), über ein Kommunikationssystem (21) eines Flugzeugs (20), von Standortinformationen einer Vielzahl anderer Flugzeuge (16) und beabsichtigten Trajektorieninformationen der Vielzahl anderer Flugzeuge (16);
Vergleichen (419) der Standortinformationen der Vielzahl anderer Flugzeuge (16) und der beabsichtigten Trajektorieninformationen der Vielzahl anderer Flugzeuge (16) mit beabsichtigten Trajektorieninformationen des Flugzeugs (20);
Bestimmen (423), basierend auf dem Vergleichen, dass Interferenz existiert, wobei die beabsichtigten Trajektorieninformationen einen Flugplan des jeweiligen Flugzeugs und physikalische Informationen des jeweiligen Flugzeugs aufweisen, und wobei die Interferenz aufweist, dass eines oder mehrere der anderen Flugzeuge (16) den Flugplan des Flugzeugs in einem vordefinierten Flugkorridor behindern;
Bestimmen (427) einer Änderung der beabsichtigten Trajektorieninformationen des Flugzeugs (20), die die Interferenz mit einem der Vielzahl anderer Flugzeuge (16) auflöst;
Darstellen (431) der Änderung der beabsichtigten Trajektorieninformationen des Flugzeugs (20) für einen Bediener des Flugzeugs (20); und
Ändern (439) der beabsichtigten Trajektorieninformationen unter Verwendung der Änderung.

12. Computerprogrammerzeugnis nach Anspruch 11, wobei die Änderung einen Stufenaufstieg aufweist.

13. Computerprogrammerzeugnis nach einem der Ansprüche 11-12, wobei die Standortinformationen Automatic Dependent Surveillance - Broadcast (ADS-B) bzw. automatische bordabhängige Überwachungs -Informationen aufweisen.

14. Computerprogrammerzeugnis nach einem der Ansprüche 11-13, wobei die Standortinformationen historische Informationen aufweisen, die während früherer Flüge durch das andere Flugzeug (16) aufgezeichnet wurden.

15. Computerprogrammerzeugnis nach einem der Ansprüche 11-14, wobei die Rechnervorrichtung gesteuert wird, Operationen durchzuführen, die des Weiteren das Bestimmen eines oder mehrerer relevanter Flugzeuge unter der Vielzahl anderer Flugzeuge (16) basierend auf den Standortinformationen und den beabsichtigten Trajektorieninformationen des Flugzeugs (20) aufweisen.

## Revendications

1. Système de traitement (22) pour un avion (20), le système de traitement (22) comprenant :
une unité d'affichage (333) ;
un périphérique de stockage matériel lisible par ordinateur (335) ; et
un processeur (339) configuré, par des instructions de programme qui sont stockées en mémoire sur le périphérique de stockage matériel lisible par ordinateur et qui sont prévues pour l'exécution par le processeur, pour amener le système de traitement à effectuer des opérations comprenant :
le fait de recevoir (405), via un système de communication (21) de l'avion (20), des informations d'emplacement d'une pluralité d'autres avions (16) et des informations concernant la trajectoire prévue de la pluralité d'autres avions (16) ;
le fait de comparer (419) les informations d'emplacement de la pluralité d'autres avions et les informations concernant la trajectoire prévue de la pluralité d'autres avions (16), à des informations (500) concernant la trajectoire prévue de l'avion (20) ;
le fait de déterminer (423) qu'une interférence (26) existe, en se basant sur la comparaison, système de traitement dans lequel les informations concernant la trajectoire prévue comprennent un plan de vol de l'avion respectif et des informations physiques de l'avion respectif, et système de traitement dans lequel l'interférence comprend ou un plusieurs avions parmi les autres avions (16) gênant le plan de vol de l'avion dans un corridor de circulation prédéfini ;
le fait de déterminer (427) une modification relative aux informations concernant la trajectoire prévue du véhicule, modification qui résout l'interférence avec au moins l'un de ceux parmi la pluralité d'autres avions (16) ;
le fait de présenter (431) à un opérateur de l'avion (20), via l'unité d'affichage, la modification relative aux informations concernant la trajectoire prévue de l'avion (20) ; et
le fait de modifier (439), en utilisant la modification, les informations concernant la trajectoire prévue de l'avion (20).

2. Système de traitement selon la revendication 1, dans lequel la modification comprend une montée de marche.

3. Système de traitement selon l'une des revendications précédentes, dans lequel les informations d'emplacement comprennent des informations de diffusion et de surveillance dépendante automatique (ADS-B).

4. Système de traitement selon l'une quelconque des revendications précédentes, dans lequel les informations d'emplacement comprennent des informations historiques enregistrées au cours de vols précédents par les autres avions (16).

5. Système de traitement selon l'une quelconque des revendications précédentes, dans lequel le processeur est configuré en outre pour déterminer un ou plusieurs avions concernés parmi la pluralité d'autres avions (16), en se basant sur les informations d'emplacement et sur les informations concernant la trajectoire prévue de l'avion (20).

6. Procédé pour faire naviguer un avion (20), ledit procédé comprenant :
le fait de recevoir (405), via un système de communication (21) de l'avion (20), des informations d'emplacement d'une pluralité d'autres avions (16) et des informations concernant la trajectoire prévue de la pluralité d'autres avions (16) ;
le fait de comparer (419) les informations d'emplacement de la pluralité d'autres avions (16) et les informations concernant la trajectoire prévue de la pluralité d'autres avions (16), à des informations (500) concernant la trajectoire prévue de l'avion (20) ;
le fait de déterminer (423) qu'une interférence existe, en se basant sur la comparaison, procédé dans lequel les informations concernant la trajectoire prévue comprennent un plan de vol de l'avion respectif et des informations physiques de l'avion respectif, et procédé dans lequel l'interférence comprend un ou plusieurs avions parmi les autres avions (16) gênant le plan de vol de l'avion dans un corridor de circulation prédéfini ;
le fait de déterminer (427) une modification relative aux informations concernant la trajectoire prévue de l'avion (20), modification qui résout l'interférence avec l'un de ceux parmi la pluralité d'autres avions (16) ;
le fait de présenter (431) à un opérateur de l'avion (20), la modification relative aux informations concernant la trajectoire prévue de l'avion (20) ; et
le fait de modifier (439), en utilisant la modification, les informations concernant la trajectoire prévue.

7. Procédé selon la revendication 6, dans lequel la modification comprend une montée de marche.

8. Procédé selon l'une des revendications 6-7, dans lequel les informations d'emplacement comprennent des informations de diffusion et de surveillance dépendante automatique (ADS-B).

9. Procédé selon l'une quelconque des revendications 6 à 8, dans lequel les informations d'emplacement comprennent des informations historiques enregistrées par les autres avions (16) au cours de vols précédents.

10. Procédé selon l'une quelconque des revendications 6 à 9, comprenant le fait de déterminer un ou plusieurs avions concernés parmi la pluralité d'autres avions (16), en se basant sur les informations d'emplacement et sur les informations concernant la trajectoire prévue de l'avion (20).

11. Produit de programme informatique comprenant des instructions de programme lisibles par ordinateur, instructions qui sont stockées en mémoire sur un périphérique de stockage de données (335) lisibles par ordinateur et qui, lorsqu'elles sont exécutées par un processeur (339), commandent un périphérique informatique afin de mettre en œuvre des opérations comprenant :
le fait de recevoir (405), via un système de communication (21) d'un avion (20), des informations d'emplacement d'une pluralité d'autres avions (16) et des informations concernant la trajectoire prévue de la pluralité d'autres avions (16) ;
le fait de comparer (419) les informations d'emplacement de la pluralité d'autres avions (16) et les informations concernant la trajectoire prévue de la pluralité d'autres avions (16), à des informations concernant la trajectoire prévue de l'avion (20) ;
le fait de déterminer (423) qu'une interférence existe, en se basant sur la comparaison, produit de programme informatique dans lequel les informations concernant la trajectoire prévue comprennent un plan de vol de l'avion respectif et des informations physiques de l'avion respectif, et produit de programme informatique dans lequel l'interférence comprend un ou plusieurs avions parmi les autres avions (16) gênant le plan de vol de l'avion dans un corridor de circulation prédéfini ;
le fait de déterminer (427) une modification relative aux informations concernant la trajectoire prévue de l'avion (20), modification qui résout l'interférence avec l'un de ceux parmi la pluralité d'autres avions (16) ;
le fait de présenter (431) à un opérateur de l'avion (20), la modification relative aux informations concernant la trajectoire prévue de l'avion (20) ; et
le fait de modifier (439), en utilisant la modification, les informations concernant la trajectoire prévue.

12. Produit de programme informatique selon la revendication 11, dans lequel la modification comprend une montée de marche.

13. Produit de programme informatique selon l'une des revendications 11-12, dans lequel les informations d'emplacement comprennent des informations de diffusion et de surveillance dépendante automatique (ADS-B).

14. Produit de programme informatique selon l'une quelconque des revendications 11 à 13, dans lequel les informations d'emplacement comprennent des informations historiques enregistrées par les autres avions (16) au cours de vols précédents.

15. Produit de programme informatique selon l'une quelconque des revendications 11 à 14, dans lequel le périphérique informatique est commandé pour effectuer des opérations comprenant en outre le fait de déterminer un ou plusieurs avions concernés parmi la pluralité d'autres avions (16), en se basant sur les informations d'emplacement et sur les informations concernant la trajectoire prévue de l'avion (20).
